# EUROPÄISCHE PATENTANMELDUNG

(11) **EP 2 218 973 A2**
(43) Veröffentlichungstag der Anmeldung: **18.08.2010**
(21) Anmeldenummer: 10000207.0
(22) Anmeldetag: 12.01.2010
(51) Int. Cl.: F24D 19/04

(54) **Unterflurklimagerät**

(30) Priorität: 12.02.2009 DE 102009008551
(71) Anmelder: Kampmann GmbH, 49811 Lingen (Ems) (DE)
(72) Erfinder: Pankratz, Nikolaus, 49504 Lotte (DE); Ensink, Hermann, 49846 Hoogstede (DE)
(74) Vertreter: Möller, Friedrich

(57) **Zusammenfassung**

Bodenkanalheizungen weisen mindestens einen in einem Gehäuse (18) angeordneten Konvektor (10) auf. Zur leichteren Reinigung ist es bekannt, den Konvektor (10) aus dem Gehäuse (18) um eine Schwenkachse (52) herauszuschwenken. Um die Verschwenkbarkeit des Konvektors (10) herbeizuführen, werden bei den bekannten Bodenkanalheizungen flexible Schläuche eingesetzt, die mit der Zeit undicht werden können und vielfach nicht sauerstoffdicht sind, was zu Korrosionen in der Heizungsanlage führt.

Die Erfindung sieht es vor, Rohre zur Zu- und Abfuhr des Heizmediums mit auf der Drehachse (52) liegenden Rohrabschnitten (59, 60) zu versehen, denen Drehmuffen (61) zugeordnet sind, damit ein Teil dieses Rohrabschnitts (59, 60) um eine auf der Drehachse (52) liegende Längsachse verdrehbar ist. Zusätzlich können der Konvektor (10) und/oder der drehbare Teil mindestens eines Rohrabschnitts (59, 60) über Drehlager (63) verfügen, der den Konvektor (10) beim Verdrehen um die Drehachse (52) führen. Die Erfindung ermöglicht ein Verschwenken des Konvektors (10) ohne flexible Schläuche.

## Beschreibung

Die Erfindung betrifft ein Unterflurklimagerät, insbesondere eine Bodenkanalheizung, gemäß dem Oberbegriff des Anspruchs 1.

Unterflurklimageräte verfügen über mindestens ein in einem wannenartigen Gehäuse angeordnetes Klimagerät. Dabei kann es sich um einen Wärmetauscher bzw. Konvektor handeln. Das wannenartige Gehäuse ist im Boden eingelassen und von einem Rost abgedeckt. Das mindestens eine Klimagerät ist im Gehäuse üblicherweise fest angeordnet. Das erschwert die Reinigung des Unterflurklimageräts.

Es ist bereits bekannt, die Reinigung solcher Unterflurklimageräte zu vereinfachen, indem das Klimagerät schwenkbar im wannenartigen Gehäuse angeordnet ist. Zum Reinigen wird das Klimagerät hochgeschwenkt. Um dies zu ermöglichen, müssen am jeweiligen Klimagerät angeschlossene Leitungen für den Vor- und Rücklauf des Klimatisierungsmediums flexible Schläuche aufweisen. Diese haben mehrere Nachteile. Zum einen dürfen sie nicht geknickt werden, wodurch sie relativ viel Platz im Gehäuse einnehmen. Zum anderen werden flexible Schläuche mit der Zeit spröde und dadurch undicht. Außerdem sind preiswerte flexible Schläuche vielfach nicht sauerstoffdicht. Durch die Schläuche diffundierender Sauerstoff kann dann zu Korrosionen im Unterflurklimagerät führen.

Der Erfindung liegt die Aufgabe zugrunde, ein Unterflurklimagerät zu schaffen, das sich besonders leicht reinigen lässt, aber die Nachteile der bisher zum Hochschwenken des Klimageräts erforderlichen flexiblen Schläuche nicht aufweist.

Ein Unterflurklimagerät zur Lösung der eingangs genannten Aufgabe weist die Merkmale des Anspruchs 1 auf. Dadurch, dass den Leitungen Drehmuffen zugeordnet sind oder die Anschlüsse zur Verbindung der Leitungen mit dem mindestens einen Klimagerät als Drehmuffen ausgebildet sind und die Drehmuffen um die Drehachse drehbar sind, können flexible Schläuche entfallen. Die Drehmuffen lassen es zu, die Leitungen aus unflexiblen, festen Rohren zu bilden und das mindestens eine Klimagerät gleichwohl aus dem wannenartigen Gehäuse zu Reinigungs- oder auch Reparaturzwecken herauszuschwenken. Das Verschwenken des mindestens einen Klimageräts kann um eine Längs- oder Querachse erfolgen. Im letztgenannten Falle kann das Klimagerät durch Hochschwenken größtenteils aus dem wannenartigen Gehäuse herausbewegt werden zur besonders einfachen Reinigung sowohl des Gehäuses als auch des jeweiligen Klimageräts, bei dem es sich um einen Wärmetauscher bzw. einen Konvektor handeln kann.

Bevorzugt ist vorgesehen, dass das Klimagerät zwei auf der Drehachse liegende Schwenklager aufweist. In diesem Fall können die Drehlager Bestandteil des Klimageräts sein. Je nachdem, wie das Klimagerät gegenüber dem Gehäuse verschwenkt werden soll und wie die Anschlüsse für den Vor- und Rücklauf erfolgen, können die Drehachsen gegenüberliegenden Stirnseiten des Klimageräts oder auch zwei Eckbereichen an einer Stirnseite zugeordnet sein.

Es ist aber auch denkbar, mindestens eines der Schwenklager dem Klimagerät zuzuordnen, es aber nicht direkt am Klimagerät vorzusehen. In einem solchen Falle ist das mindestens eine Drehlager durch eine Drehmuffe gebildet, die zum Anschluss von Rohrabschnitten der Rohrleitungen für den Vor- und/oder Rücklauf des Klimageräts dient. Dann bildet mindestens eine Drehmuffe ein Drehlager. Weiterhin ist es denkbar, separate Drehlager vorzusehen, in denen mindestens ein Rohrabschnitt drehbar ist.

Allen denkbaren Gestaltungsmöglichkeiten der Drehlager gemein ist, dass alle Drehlager auf einer gemeinsamen Achse liegen, die die Drehachse bildet, um die das mindestens eine Klimagerät zum Reinigen des gesamten Unterflurklimageräts hochschwenkbar ist.

Sowohl die Drehlager als auch die Drehmuffen sind in solchen Bereichen der Rohrabschnitte angeordnet, deren Längsachsen auf der Drehachse liegen. Dadurch verbindet die jeweilige Drehmuffe einen feststehenden Teil des Rohrabschnitts und mit einem beweglichen Teil, der mit dem Klimagerät um die Drehachse verschwenkbar ist.

Eine bevorzugte Ausgestaltung der Erfindung sieht mindestens eine Stütze vor, die das jeweilige Klimatisierungsgerät in der hochgeklappten Stellung hält und sichert. Auf diese Weise wird ein unbeabsichtigtes Zurückschwenken des Klimageräts bei Reinigungs- oder Reparaturarbeiten zuverlässig vermieden.

Eine vorteilhafte Weiterbildung des Unterflurklimageräts sieht es vor, das mindestens eine Klimagerät im wannenartigen Gehäuse abzustützen. Diese Abstützung erfolgt bevorzugt mit am Klimagerät angeordneten Abstützmitteln. Dadurch können die Abstützmittel mit dem Klimagerät hochgeschwenkt werden, wodurch beim Reinigen des Gehäuses die Abstützmittel nicht stören. Bevorzugt sind die Abstützmittel als fest mit dem Klimagerät verbundene Stützkonsolen ausgebildet, die sich insbesondere nur auf der Bodenwandung des Gehäuses abstützen. Dadurch können Wärmetauscherflächen bildende lamellenartige Wärmetauscherbleche des Klimageräts vom Boden beabstandet sein, um frei von der zu erwärmenden oder zu kühlenden Luft umströmt zu werden. Vor allem brauchen die dünnwandigen Wärmetauscherbleche nicht das Gewicht des Klimageräts zu tragen, so dass sie keinen mechanischen Belastungen ausgesetzt sind.

Eine bevorzugte Ausgestaltung des Unterflurklimageräts sieht Leitflächen am Klimagerät vor, die vorzugsweise mit dem Klimagerät lösbar verbunden sind, beispielsweise durch Schrauben. Die Leitflächen stabilisieren den nur an Drehlagern im Gehäuse gelagerten Konvektor und dienen gleichzeitig der Ausrichtung der am Klimagerät vorbeiströmenden Luft. Bevorzugt sind die Leitflächen einem oberen Teil der aufrechten Längsseiten des Klimageräts zugeordnet. Dadurch wird eine besonders wirksame Stabilisierung des Klimageräts herbeigeführt und eine gerichtete Luftströmung aus dem wannenartigen Gehäuse erzeugt, vorzugsweise im Wesentlichen senkrecht nach oben aus dem Unterflurklimagerät heraus.

Es ist des Weiteren vorgesehen, dass das wannenartige Gehäuse außenseitig Verstärkungen aufweist. Die Verstärkungen dienen dazu, das Gehäuse zu stabilisieren, und zwar insbesondere dann, wenn es im Estrich oder dergleichen eingegossen wird, damit die Seitenwände des wannenartigen Gehäuses vom noch flüssigen Estrich oder dergleichen nicht zusammengedrückt werden. Die Verstärkungen erstrecken sich bevorzugt in Querschnittsrichtung des Gehäuses außen um dasselbe herum. Insbesondere erstrecken sich die Verstärkungen über die Bodenwandung und mindestens einen Teil beider gegenüberliegender Längsseitenwandungen des Gehäuses. Damit umgeben die Verstärkungen das Gehäuse U-förmig, wodurch ein Zusammendrücken der Längsseitenwandungen des oben offenen Gehäuses besonders wirksam vermieden wird.

Nach einer weiteren Ausgestaltung der Erfindung ist vorgesehen, dass die Verstärkungen Führungen zur Höhenverstellung von Stützfüßen des Gehäuses bilden. Denkbar ist es auch, dass die Stützfüße an den Verstärkungen befestigt sind. Dadurch leiten die Stützfüße ihre Kräfte in die Verstärkungen ein, wodurch die auf die Stützfüße ausgeübten Kräfte des Unterflurklimageräts von den Verstärkungen aufgenommen werden und Verformungen insbesondere der Längsseitenwände des Gehäuses vermieden werden.

Des Weiteren ist es vorgesehen, den offenen oberen Rand des wannenartigen Gehäuses mit Auflagen und/oder Führungen für den Rost zur Abdeckung des Gehäuses zu versehen. Die Führungen können als nach außen weisende Winkel ausgebildet sein, die auch zur Versteifung des oberen Rands des Gehäuses dienen. Bevorzugt sind die winkelartig ausgebildeten Führungen und Auflagen durchgehend umlaufend um den oberen offenen Rand des Gehäuses angeordnet. Dadurch bilden die winkelartigen Aufnahmen und Führungen einen den oberen Rand des Gehäuses verstärkenden Rahmen. Mit diesem Rahmen sind bevorzugt die oberen Ränder der Verstärkungen des Gehäuses verbunden, wodurch das Gehäuse eine stabile rahmenartige Einheit bildet. Die Verstärkungen stehen bevorzugt so weit außen gegenüber den Längsseitenwänden des Gehäuses vor wie die von oben offenen Winkelprofilen gebildeten Auflagen und Führungen am oberen Rand des Gehäuses. Dadurch kann das Gehäuse direkt an einer Wand angeordnet werden.

Bei einer bevorzugten Ausbildung des Unterflurklimageräts ist es vorgesehen, der Öffnung des Gehäuses mindestens eine hochklappbare bzw. abnehmbare Auflagetraverse für den Rost zuzuordnen. Die Auflagetraverse dient dabei zur Abstützung insbesondere sogenannter Linearroste, nämlich längsverlaufender Roste. Dadurch, dass die mindestens eine Auflagetraverse hochklappbar bzw. abnehmbar ist, kann sie nach dem Entfernen des Rosts die obere Öffnung des Gehäuses vollflächig freigeben zum Herausklappen des mindestens einen Klimageräts, wodurch die mindestens eine Auflagetraverse beim Reinigen des Unterflurklimageräts nicht stört.

Bevorzugte Ausführungsbeispiele des erfindungsgemäßen Unterflurklimageräts werden nachfolgend anhand der Zeichnung näher erläutert. In dieser zeigen:
- Fig. 1: eine Seitenansicht eines ersten Ausführungsbeispiels des Unterflurklimageräts im Längsschnitt mit heruntergeklapptem und hochgeklapptem Klimagerät,
- Fig. 2: eine Draufsicht auf das Unterflurklimagerät der Fig. 1 ohne Rost,
- Fig. 3: einen vergrößert dargestellten Querschnitt III-III durch das Unterflurklimagerät der Fig. 1 und 2,
- Fig. 4: eine Seitenansicht eines zweiten Ausführungsbeispiels des Unterflurklimageräts im Schnitt,
- Fig. 5: eine Draufsicht auf das Unterflurklimagerät der Fig. 4 ohne Rost,
- Fig. 6: einen vergrößerten Querschnitt VI-VI durch das Unterflurklimagerät der Fig. 4 und 5,
- Fig. 7: eine Seitenansicht eines dritten Ausführungsbeispiels des Unterflurklimageräts im Schnitt,
- Fig. 8: eine Draufsicht auf das Unterflurklimagerät der Fig. 7 ohne ein Rost, und
- Fig. 9: einen vergrößerten Schnitt IX-IX durch das Unterflurklimagerät der Fig. 7 und 8.

Alle in den Figuren gezeigten Ausführungsbeispiele zeigen als Bodenkanalheizungen ausgebildete Unterflurklimageräte.

Jede Bodenkanalheizung verfügt in den gezeigten Ausführungsbeispielen über ein Klimagerät, bei dem es sich um einen als Konvektor 10 ausgebildeten Wärmetauscher handelt. Der Konvektor 10 weist zwei Konvektorrohre 11 auf, die sich längs durch den länglichen Konvektor 10 erstrecken. Auf den Konvektorrohren 11 befindet sich eine Vielzahl von dünnen Konvektorblechen 12, die in gleichen Abständen zueinander angeordnet sind, so dass zwischen jeweils zwei Konvektorblechen 12 ein als Strömungskanal dienender schmaler Spalt vorhanden ist. Die Konvektorbleche 12 folgen in Längsrichtung des Konvektors 10 aufeinander. Die Konvektorbleche 12 verfügen über eine rechteckige Grundfläche, wodurch der Konvektor 10 einen entsprechenden rechteckigen Querschnitt erhält.

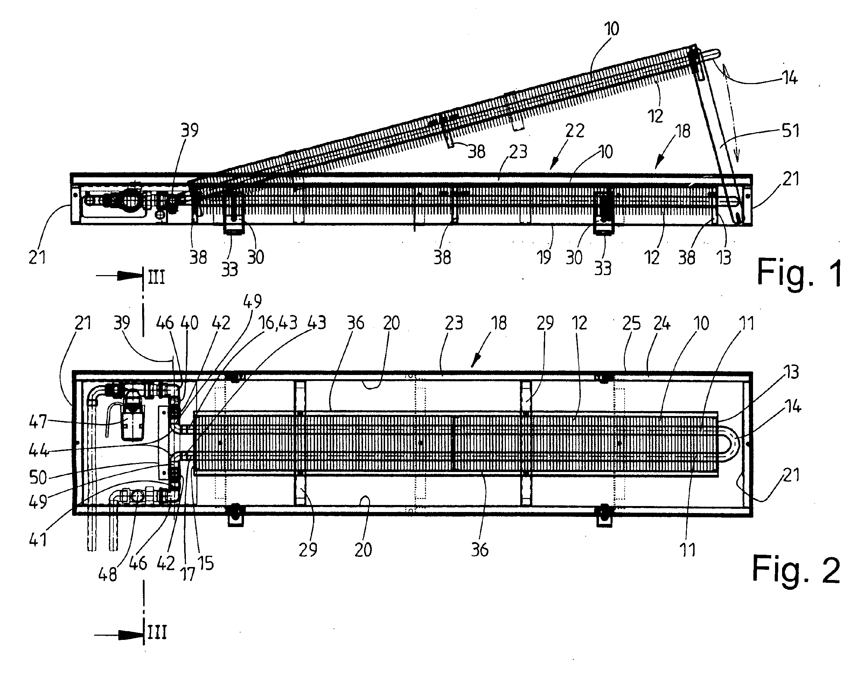

Die Fig. 1 bis 3 zeigen ein Ausführungsbeispiel der erfindungsgemäßen Bodenkanalheizung, bei dem die Konvektorrohre 11 des Konvektors 10 an einer Stirnseite 13 miteinander verbunden sind durch einen außerhalb des Konvektors 10 liegenden Rohrbogen 14. An der gegenüberliegenden Stirnseite 15 des Konvektors 10 enden die parallel nebeneinanderliegenden Konvektorrohre 11 mit einem Vorlaufende 16 und einem Rücklaufende 17.

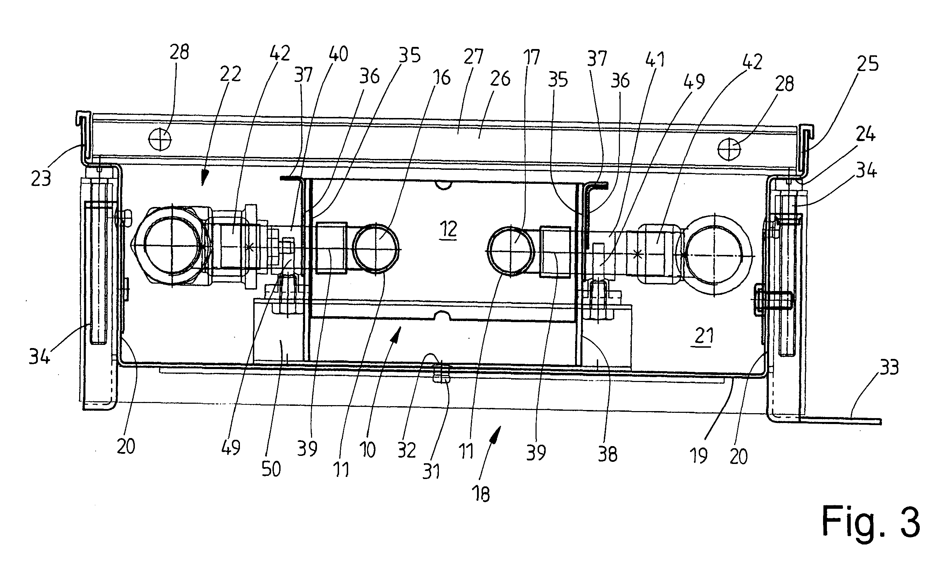

Der Konvektor 10 weist an seinen gegenüberliegenden Längsseiten 35 Leitbleche 36 auf. Jeweils ein Leitblech 36 ist einer Längsseite 35 des Konvektors 10 zugeordnet. Die Leitbleche 36 laufen durchgehend über die gesamte Länge des Konvektors 10. Befestigt sind die Leitbleche 36 an den aufrechten Seitenkanten der Konvektorbleche 12. In der Höhe sind die Leitbleche 36 so bemessen, dass sie sich nur über einen oberen Teil der Längsseiten des Konvektors 10 erstrecken, und zwar über etwa zwei Drittel der Höhe (Fig. 3). Die Leitbleche 36 verfügen über einen Querschnitt nach Art eines ungleichschenkligen Winkels. Kürzere (schmale) horizontale Schenkel 37 der Leitbleche 36 schließen etwa bündig mit der Oberseite des Konvektors 10 ab. Diese Schenkel 37 sind von den gegenüberliegenden Längsseiten 35 des Konvektors 10 weggerichtet. Die Schenkel 37 dienen so als Versteifung der Leitbleche 36 und damit auch des Konvektors 10.

Der Konvektor 10 ist auf der Bodenwandung 19 des Gehäuses 18 an mehreren Stellen abgestützt durch Stützkonsolen 38. Im gezeigten Ausführungsbeispiel sind drei gleich ausgebildete Stützkonsolen 38 vorgesehen, und zwar an jeder Stirnseite 13 und 15 des Konvektors 10 sowie etwa in der Mitte des Konvektors 10. Die Stützkonsolen 38 sind so ausgebildet, dass sie gegenüber unteren Kanten der Konvektorbleche 12, also die Unterseite des Konvektors 10, zur Bodenwandung 19 des Gehäuses 18 hin vorstehen. Dadurch wird der Konvektor 10 mit Abstand über der Bodenwandung 19 im Gehäuse 18 von den drei Stützkonsolen 38 abgestützt (Fig. 1). Es kann dadurch Luft von der Unterseite des Konvektors 10 durch die Zwischenräume zwischen den Konvektorblechen 12 hindurch, also durch den Konvektor 10, nach oben strömen.

Der Konvektor 10 ist in einem wannenartigen Gehäuse 18 mit etwa U-förmigem Querschnitt angeordnet. Das Gehäuse 18 weist eine rechteckige, horizontale Bodenwandung 19, zwei parallele, aufrechte Längsseitenwandungen 20 und zwei gegenüberliegende, aufrechte Stirnwandungen 21 auf. Eine Oberseite 22 des Gehäuses 18 ist vollständig offen. Ein die offene Oberseite 22 des Gehäuses 18 umgebender Rand desselben ist mit einem umlaufenden Rahmen 23 versehen. Dieser weist ein gleichschenkliges, oben offenes Winkelprofil auf mit einer gegenüber den Längsseitenwandungen 20 und den Stirnwandungen 21 nach außen vorstehenden horizontalen Auflagefläche 24 und einer gegenüber der Auflagefläche 24 senkrecht nach oben stehenden Führungsfläche 25 an der Außenseite der Auflagefläche 24.

Der obere, umlaufende Rahmen 23 an der Oberseite 22 des Gehäuses 18 dient als Auflage und zur Führung eines nur in der Fig. 3 im Querschnitt gezeigten Rosts 26. Der Rost 26 kann beliebig gestaltet sein. Bevorzugt besteht er aus mit Abstand aufeinanderfolgenden plattenartigen Querstreben 27 und diese verbindende, stangenartige Längsstränge 28. Ein solcher Rost 26 wird auch als Linearrost bezeichnet. Dieser kann auch rollbar sein, wenn die Längsstränge 28 biegeschlaff ausgebildet sind, beispielsweise als Seile. Wenn der Rost 26 als Linearrost oder als Rollrost ausgebildet ist, befinden sich in regelmäßigen Abständen in Längsrichtung des Gehäuses 18 unter dem Rost 26 quergerichtete Auflagetraversen 29 (Fig. 1 und 2), die schwenkbar unter dem Rahmen 23 angeordnet oder wegnehmbar sind, wenn der Rost 26 von der Oberseite 22 des Gehäuses 18 entfernt wurde.

Die Außenseite des Gehäuses 18 ist mit mehreren in Längsrichtung des Gehäuses 18 mit vorzugsweise gleichmäßigen Abständen aufeinanderfolgenden Verstärkungen 30 versehen. Die Verstärkungen 30 umgeben das Gehäuse 18 im Querschnitt gesehen (Fig. 3) U-förmig, indem sie außen mit den Längsseitenwänden 20 und der Bodenwandung 19 verbunden sind. Die Verstärkungen 30 weisen eine solche Breite auf, dass sie gegenüber den Längsseitenwandungen 20 nur so weit nach außen vorstehen, dass sie nicht gegenüber dem das Gehäuse 18 nach außen erweiternden Rahmen 23, nämlich die horizontale Auflagefläche 24 desselben, vorstehen. Auf diese Weise schließen die den Längsseitenwandungen 20 zugeordneten aufrechten Abschnitte der Verstärkungen 30 bündig mit der äußeren Führungsfläche 25 des Rahmens 23 ab. Die Verstärkungen 30 sind bevorzugt aus Winkelprofilen gebildet, deren parallel zur Bodenwandung 19 bzw. den Längsseitenwandungen 20 verlaufenden Schenkel durch Niete, vorzugsweise Blindniete 31, mit dem Gehäuse 18 verbunden sind. Dabei sind die Blindniete 31 so positioniert, dass ihre flachen, glatten Köpfe 32 im Inneren des Gehäuses 18 sich befinden.

An der Außenseite des Gehäuses 18 sind Stützfüße 33 vorgesehen. Im gezeigten Ausführungsbeispiel weist das Gehäuse 18 vier Stützfüße 33 auf, und zwar jeweils zwei Stützfüße 33 auf gegenüberliegenden Außenseiten jeder Längsseitenwandung 20. Die Stützfüße 33 sind in den Bereichen jeder der beiden von den Stirnwandungen 21 des Gehäuses 18 um etwa ein Viertel der Länge des Gehäuses 18 beabstandeten Verstärkungen 30 vorgesehen. Jeder Stützfuß 33 ist höhenverstellbar. Zu diesem Zweck dient eine Führung in den den Längsseitenwandungen 20 zugeordneten Abschnitten der Verstärkungen 30. Im einfachsten Falle sind die Führungen als senkrechte Langlöcher ausgebildet, in die Zapfen der Stützfüße 33 formschlüssig eingreifen. Die Höhenverstellung und Arretierung der Stützfüße 33 erfolgt durch längliche, vertikale Einstellschrauben 34. Durch die höhenverstellbaren Stützfüße 33 kann das Gehäuse 18 auf einem Gebäudeboden abgestützt und ausgerichtet werden. Außerdem lässt sich durch die Höhenverstellung der Stützfüße 33 die Höhe des Gehäuses 18 gegenüber dem Gebäudeboden einstellen auf die Dicke der auf den Gebäudeboden aufzubringenden Estrichschicht, so dass die Oberseite des Rahmens 23 des Gehäuses 18 etwa bündig mit der Oberfläche des in den Figuren nicht gezeigten Estrichs oder einem Doppelboden abschließt.

Erfindungsgemäß ist der Konvektor 10 schwenkbar im Gehäuse 18 gelagert. Dabei werden mit dem Konvektor 10 auch die damit verbundenen Stützkonsolen 38 verschwenkt. Ebenso können die Auflagetraversen 29, wenn sie am Konvektor 10 befestigt sind, mit dem Konvektor 10 verschwenkt werden. Denkbar ist es aber auch, dass die Auflagetraversen 29 lösbar auf dem Konvektor 10 aufgelegt oder am Rand des Gehäuses 18 gelagert sind. Dann werden die Auflagetraversen 29 abgenommen, bevor der Konvektor 10 aus dem Gehäuse 18 herausgeschwenkt wird.

Im gezeigten Ausführungsbeispiel (Fig. 1 bis 3) ist der Konvektor 10 um eine horizontale, quer zur Längsachse des Konvektors 10 bzw. des Gehäuses 18 verlaufende Drehachse 39 verschwenkbar. Diese Drehachse 39 liegt mit geringem Abstand vor der Stirnseite 15 des Konvektors 10, aus der das Vorlaufende 16 und das Rücklaufende 17 der Konvektorrohre 11 aus dem Konvektor 10 herausgeführt sind. Auf der Drehachse 39 sind starre Rohrabschnitte 40 und 41 der festen Rohre zur Versorgung des Vorlaufs und des Rücklaufs des Konvektors 10 mit einem Wärmeträgermedium, insbesondere heißem Wasser, angeordnet. Die zueinander gerichteten Enden der beiden mit ihren Längsachsen auf der Drehachse 39 liegenden Rohrabschnitte 40 und 41 sind mit rechtwinkligen Rohrbögen 44 versehen, die über Anschlüsse 43, 45 fest mit dem Vorlaufende 16 einerseits und dem Rücklaufende 17 andererseits des Konvektors 10 verbunden sind. Die voneinander wegweisenden Enden der Rohrabschnitte 40 und 41 sind ebenfalls mit rechtwinkligen Rohrbögen 46 versehen. Der Rohrbogen 45 am zum Vorlauf des Konvektors 10 führenden Rohrabschnitt 40 ist mit einem Ventil zur Veränderung der Wärmeabgabe des Konvektors 10 versehen, wobei es sich vorzugsweise um einen thermoelektrischen Stellantrieb 47 handelt. Dieser wird von einem Fernthermostat betätigt bzw. gesteuert. Dem Rohrbogen 46 des dem Rücklauf zugeordneten Rohrabschnitts 41 ist ein Ventil 48 zugeordnet, bei dem es sich gegebenenfalls um ein Absperrventil handeln kann. An den Stellantrieb 47 und das Ventil 48 sind bauseitige Rohrleitungen anschließbar, und zwar vorzugsweise mit Schnellanschlüssen.

Jedem mit seiner Längsachse auf der Drehachse 39 zum Verschwenken des Konvektors 10 liegenden Rohrabschnitt 40 und 41 ist eine Drehmuffe 42 zugeordnet. Die Drehmuffen 42 unterteilen jeden Rohrabschnitt 40 und 41 in einen feststehenden Teil und einen drehbaren Teil. Die drehbaren Teile sind über die Rohrbögen 44 an das Vorlaufende 16 und das Rücklaufende 17 des Konvektors 10 angeschlossen. Die feststehenden Teile der Rohrabschnitte 40 und 41 sind mit den außenliegenden Rohrbögen 46 verbunden. Jedem Rohrabschnitt 40 und 41 ist ein Drehlager 49 zugeordnet. Die Drehachsen beider Drehlager 49 liegen wiederum auf der Drehachse 39, um die der Konvektor 10 verschwenkbar ist. Beide Drehlager 49 sind über eine Konsole 50 mit der Bodenwandung 19 des Gehäuses 18 fest verbunden. Die Drehlager 49 sind den drehbaren Teilen der Rohrabschnitte 40 und 41 zugeordnet die auf zueinander weisenden Seiten der Drehmuffen 42 liegen. Die drehbaren Teile der Rohrabschnitte 40 und 41 sind so geführt um die Drehachse 39 verdrehbar, dass die Drehmuffen 42 beim Verschwenken des Konvektors 10 keinen nennenswerten mechanischen Belastungen ausgesetzt sind, weil diese von den Drehlagern 49 aufgenommen werden. Alternativ ist es auch denkbar, an der Stelle der Drehlager 49 über Schellen oder dergleichen die unverdrehbaren Teile der Rohrabschnitte 40 und 41 fest mit der Konsole 50 zu verbinden. Dann werden mit Schellen die festen Teile der Vorabschnitte 40 und 41 auf der Drehachse 39 gehalten. In diesem Fall dienen die Drehmuffen 42 gleichzeitig als Drehlager. Die Drehmuffen 42 nehmen dann auch die beim Verschwenken des Konvektors 10 auftretenden mechanischen Belastungen auf.

Die Fig. 1 zeigt eine Stütze 51, die den Konvektor 10 im hochgeklappten Zustand hält und sichert. Die Stütze 51 ist schwenkbar am Gehäuse 18, vorzugsweise einer Längsseitenwandung 20, befestigt, so dass sie beim heruntergeschwenkten Konvektor 10 in das Gehäuse 18 geschwenkt werden kann. Nach dem Hochschwenken des Konvektors 10 wird die Stütze aus dem Gehäuse 18 herausgeschwenkt und vorzugsweise mit einer Raste oder dergleichen im Bereich der hochgeschwenkten Stirnseite 13 des Konvektors 10 formschlüssig fixiert, wodurch die Stütze 51 sicherstellt, dass beim Reinigen des Konvektors 10 und des wannenartigen Gehäuses 18 der Konvektor 10 nicht unbeabsichtigt in das Gehäuse 18 fällt.

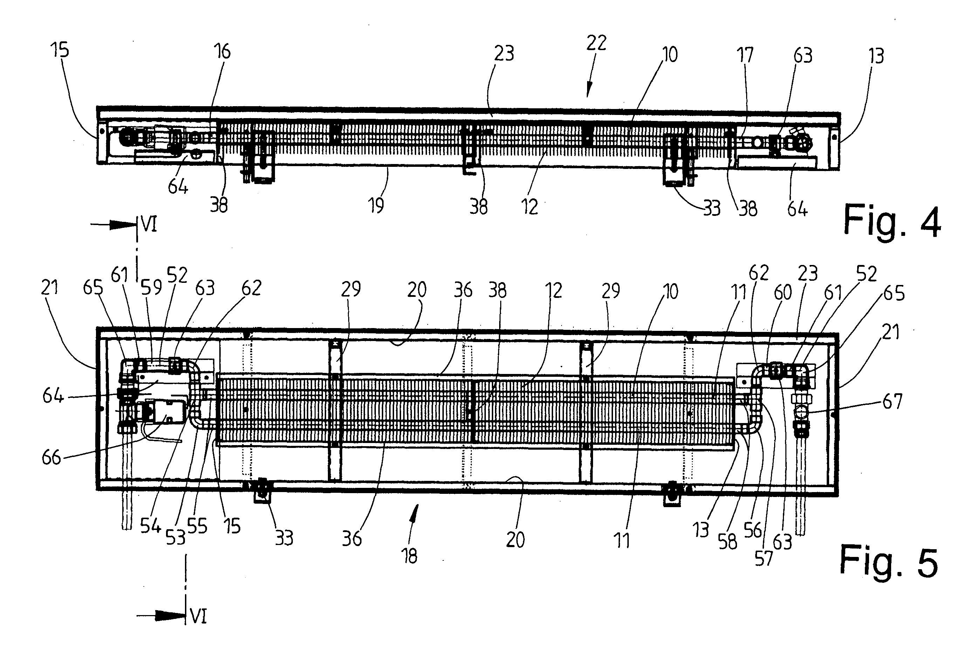

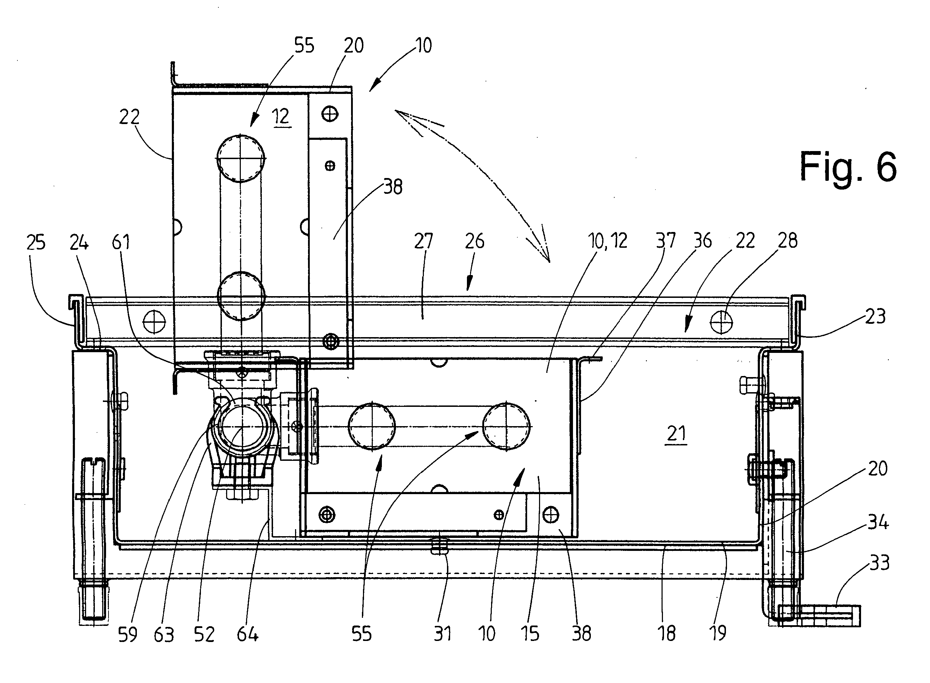

Die Fig. 4 bis 6 zeigen ein zweites Ausführungsbeispiel einer erfindungsgemäßen Bodenkanalheizung. Hier ist der Konvektor 10 um eine in seiner Längsrichtung verlaufende Drehachse 52 verschwenkbar von einer Stellung im Gehäuse 18 in eine um etwa 90° hochgeklappte Stellung außerhalb des Gehäuses 18. In dieser hochgeklappten Stellung sind das innen glatte Gehäuse 18 und der Konvektor 10 (Fig. 6) leicht zu reinigen, zu warten und gegebenenfalls auch zu reparieren. Die Schwenkachse 52 liegt mit Abstand neben einer Längsseitenwandung 20 des Konvektors 10, und zwar etwa auf halber Höhe desselben.

Der Konvektor 10 und das Gehäuse 18 sind bei diesem Ausführungsbeispiel der Bodenkanalheizung genauso ausgebildet wie beim Ausführungsbeispiel der Fig. 1 bis 3. Deswegen werden für gleiche Teile gleiche Bezugsziffern verwendet.

Beim Konvektor 10 der Bodenkanalheizung der Fig. 4 bis 6 sind die beiden Konvektorrohre 11 aus jeder Stirnseite 13 und 15 herausgeführt. Die aus der Stirnseite 15 herausgeführten Enden der Konvektorrohre 11 und 12 sind durch einen Rohrbogen 53 und eine T-Muffe 54 verbunden zu einem gemeinsamen Vorlaufende 55. Die an der gegenüberliegenden Stirnseite 13 herausgeführten Konvektorrohre 11 und 12 sind ebenfalls durch einen Rohrbogen 56 und eine T-Muffe 57 verbunden zu einem gemeinsamen Rücklaufende 58. Im gezeigten Ausführungsbeispiel liegen das Vorlaufende 55 und das Rücklaufende 58 somit an gegenüberliegenden Enden des Konvektors 10.

Dem Vorlaufende 55 ist ein Rohrabschnitt 59 und dem Rücklaufende 58 ein Rohrabschnitt 60 zugeordnet. Die Längsachsen beider Rohrabschnitte 59 und 60 liegen auf der Drehachse 52, um die der Konvektor 10 gegenüber dem Gehäuse 18 um seine zur Schwenkachse 52 parallele Längsachse verschwenkbar ist. Jedem Rohrabschnitt 59, 60 ist eine Drehmuffe 61 zugeordnet, die den jeweiligen Rohrabschnitt 59 bzw. 60 in zwei Teile teilt. Die an zueinander gerichteten Seiten der Drehmuffen 61 liegenden Teile der Rohrabschnitte 59 und 60 sind beim Verschwenken des Konvektors 10 um ihre Längsachsen drehbar. An diese drehbaren Teile der Rohrabschnitte 59 und 60 sind Rohrbögen 62 mit den T-Muffen 54 bzw. 57 am Vorlaufende 55 und am Rücklaufende 58 des Konvektors 10 angeschlossen. Die feststehenden Teile der Rohrabschnitte 59 und 60 sind den voneinander wegweisenden Seiten der Drehmuffen 61, und zwar den feststehenden Teilen derselben, zugeordnet.

Die drehbaren Teile der Rohrabschnitte 59 und 60 weisen jeweils ein Drehlager 63 auf, das fest mit einer auf der Bodenwandung 19 des Gehäuses 18 fixierten Konsole 64 verbunden ist. Die Drehlager 63 stützen die drehbaren Teile der Rohrabschnitte 59 und 60 zur Entlastung der Drehmuffen 61 am Gehäuse 18 ab.

Zum Ersatz der Drehlager 63 können die feststehenden äußeren Teile der Rohrabschnitte 59 und 60 mit einer Schelle an der Konsole 64 unverdrehbar befestigt sein. Bei dieser alternativen Ausgestaltung der Erfindung führen und tragen die Drehmuffen 61 den Konvektor 10 beim Verschwenken desselben gegenüber dem Gehäuse 18. Die äußeren Enden der feststehenden Teile der Rohrabschnitte 59 und 60 sind jeweils mit Rohrbögen 65 verbunden. Dem Rohrbogen 65 am Vorlaufende 55 des Konvektors 10 ist ein Stellantrieb 66 zugeordnet, der die Durchflussmenge des erwärmten Wassers durch den Konvektor 10 reguliert, und zwar gesteuert von einem Fernthermostat. Dem Rohrbogen 65 am Rücklaufende 58 ist ein Ventil 67 nachgeordnet. Bauseitige Rohre zur Zu- und Abfuhr des durch den Konvektor 10 fließenden Wassers sind mit dem Stellantrieb 66 und dem Ventil 67 verbunden und gegebenenfalls mit Schnellverschlüssen.

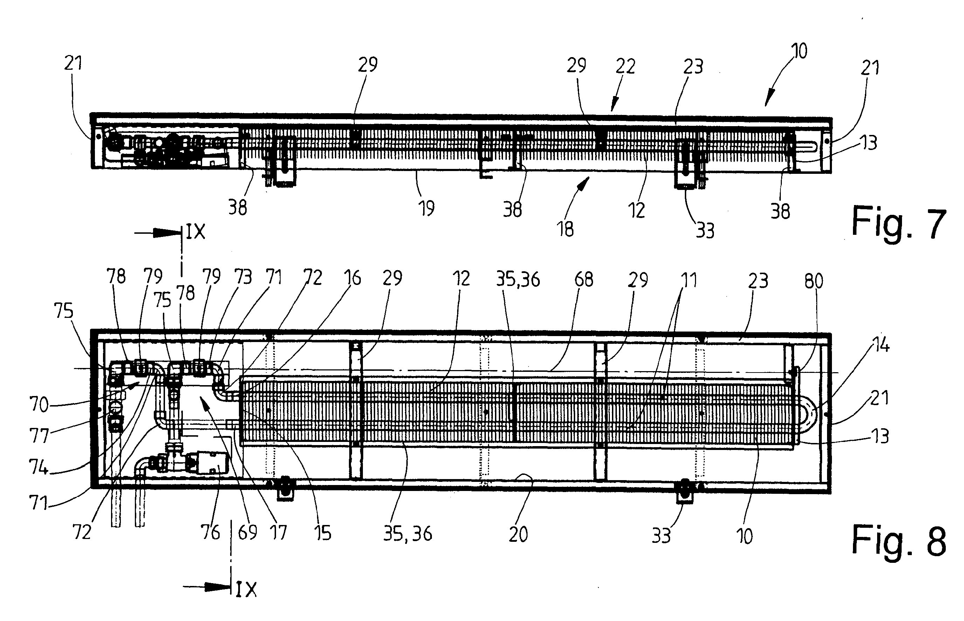

Eine Bodenkanalheizung nach einem dritten Ausführungsbeispiel der Erfindung ist in den Fig. 7 bis 9 gezeigt. Auch hier sind wieder für gleiche Teile des Konvektors 10 und des Gehäuses 18 mit den zuvor beschriebenen Ausführungsbeispielen gleiche Bezugsziffern verwendet.

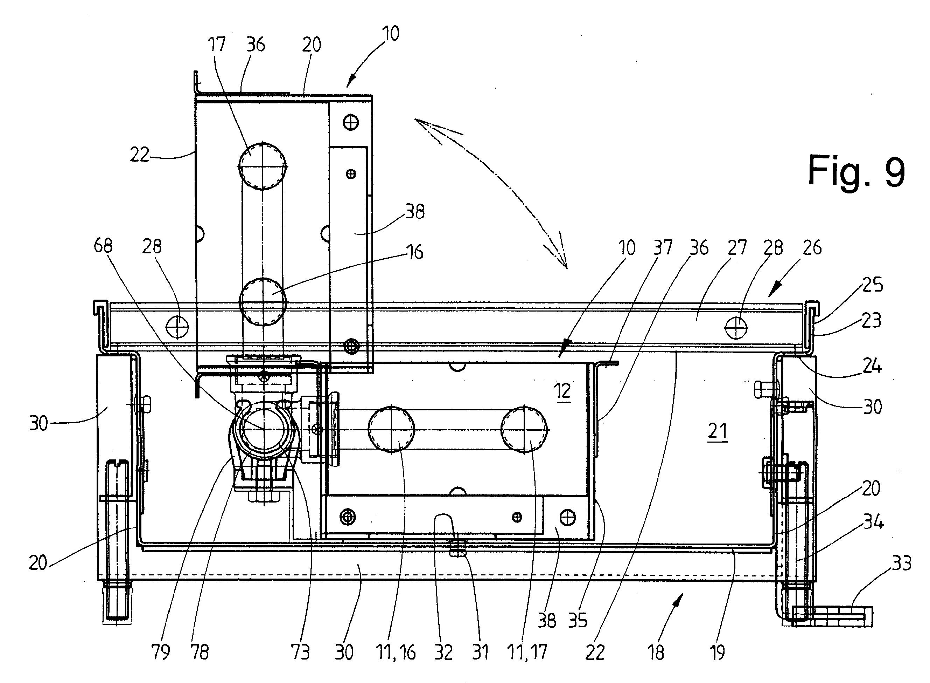

Beim Ausführungsbeispiel der Fig. 7 bis 9 ist der Konvektor 10 auch um eine in Längsrichtung desselben verlaufende Drehachse 68 relativ zum Gehäuse 18 verschwenkbar. Diese Drehachse 68 liegt wie beim Ausführungsbeispiel der Fig. 4 bis 6 mit Abstand seitlich neben einer Längsseitenwandung 20 des Konvektors 10, und zwar etwa auf halber Höhe desselben (Fig. 9). Dadurch ist auch der Konvektor 10 um 90° verschwenkbar in eine ein einfaches Reinigen des Konvektors 10 und des Gehäuses 18 ermöglichende senkrechte Stellung (Fig. 9).

Beim gezeigten Ausführungsbeispiel weist der Konvektor 10 an der Stirnseite 13 durch einen Rohrbogen 14 verbundene Konvektorrohre 11 auf, so dass die Konvektorrohre 11 wie beim Ausführungsbeispiel der Fig. 1 bis 3 mit dem Vorlaufende 16 und dem Rücklaufende 17 aus der Stirnseite 15 austreten.

An das Vorlaufende 16 und das Rücklaufende 17 sind im Gehäuse 18 liegende Abschnitte einer zum Vorlaufende 16 führenden Rohrleitung 69 und einer zum Rücklaufende 17 führenden Rohrleitung 70 angeschlossen. Jeder Rohrleitung 69 und 70 ist durch drei 90°-Rohrbögen 71, 72 und 75 S-förmig ausgebildet, und zwar derart, dass ein Rohrabschnitt 73 der Rohrleitung 69 und ein Rohrabschnitt 74 der Rohrleitung 70 gemeinsam mit in Längsrichtung der Bodenkanalheizung hintereinanderliegenden Längsachsen auf der Drehachse 68 des Konvektors 10 liegen. Im Anschluss an die Rohrabschnitte 73 und 74 sind in Richtung aus dem Gehäuse 18 heraus die Rohrleitungen 69 und 70 durch jeweils einen Rohrbogen 75 umgelenkt in Querrichtung der Bodenkanalheizung. Der Rohrleitung 69 für den Vorlauf ist wiederum ein Stellantrieb 47 zur Veränderung der Durchlaufmenge des heißen Wassers durch den Konvektor 10 zugeordnet, während die Rohrleitung 70 ein Ventil 77 aufweist. Die Enden der Rohrleitung 69 und 70 sind gegebenenfalls über Schnellverschlüsse an bauseitig vorhandene Rohrleitungen anschließbar.

Den beiden gemeinsam auf der Drehachse 68 liegenden Rohrabschnitte 73 und 74 ist auch im gezeigten Ausführungsbeispiel jeweils eine Drehmuffe 78, 79 zugeordnet. Jede Drehmuffe 78 und 79 teilt die Rohrabschnitte 73 und 74 in einen undrehbaren und einen drehbaren Teil. Die drehbaren Teile der Rohrabschnitte 73 und 74 liegen auf der zur Stirnseite 15 des Konvektors 10 weisenden Seite der Drehmuffen 78. Diese drehbaren Teile der Rohrabschnitte 73 und 74 sind mit dem Vorlaufende 16 und dem Rücklaufende 17 des Konvektors 10 verbunden. Durch Schwenken des Konvektors 10 um die Drehachse 68 werden die drehbaren Teile beider Rohrabschnitte 73, 74 mit den drehbaren Teilen der Drehmuffen 78 gemeinsam um ihre auf der Drehachse 68 liegenden Längsachsen verdreht.

Beim gezeigten Ausführungsbeispiel weist der Konvektor 10 ein ihm direkt zugeordnetes Drehlager 80 im Bereich seiner Stirnseite 13 auf. Ein zweites Drehlager 79 ist dem drehbaren Teil eines Rohrabschnitts 73 oder 74 zugeordnet. Es kann auch dem drehbaren Teil jedes Rohrabschnitts 73 und 74 ein eigenes Drehlager 79 zugeordnet sein. Die Drehlager 79 können aber auch von den Drehmuffen 78 gebildet sein. Denkbar ist es auch, ein zweites Drehlager 79 direkt an der Stirnseite 15 des Konvektors 10 anzuordnen, so dass die beiden Drehlager 79 und 80 für den Konvektor 10 sich an gegenüberliegenden Stirnseiten 13 und 15 desselben befinden. Das kann auch für das Ausführungsbeispiel der Fig. 4 bis 6 gelten. Dann können Drehlager im Bereich der Drehmuffen bzw. der Rohrabschnitte entfallen.

Die Erfindung eignet sich auch für in den Figuren nicht dargestellte Unterflurklimageräte, wie beispielsweise Bodenkonvektoren, die mit einem zusätzlichen Gebläse, insbesondere einem Querstromgebläse, versehen sind. Das Gebläse bzw. Querstromgebläse ist dann zur Reinigung des Bodenkonvektors aus dem Gehäuse herausnehmbar und dann der Konvektor 10 hochschwenkbar.

Alle vorstehend beschriebenen Ausführungsbeispiele für Bodenkanalheizungen, Bodenkonvektoren und sonstigen Unterflurklimageräte zeichnen sich dadurch aus, dass die Konvektoren 10 zur Reinigung verschwenkbar im Gehäuse 18 gelagert sind, aber die Zufuhr und Abfuhr des Wärmeträgermediums mit festen Rohren bzw. Rohrleitungen erfolgen kann, so dass keine flexiblen Schläuche erforderlich sind.

### Bezugszeichenliste:

- 10: Konvektor
- 11: Konvektorrohr
- 12: Konvektorblech
- 13: Stirnseite
- 14: Rohrbogen
- 15: Stirnseite
- 16: Vorlaufende
- 17: Rücklaufende
- 18: Gehäuse
- 19: Bodenwandung
- 20: Längsseitenwandung
- 21: Stirnwandung
- 22: Oberseite
- 23: Rahmen
- 24: Auflagefläche
- 25: Führungsfläche
- 26: Rost
- 27: Querstrebe
- 28: Längsstrang
- 29: Auflagetraverse
- 30: Verstärkung
- 31: Blindniet
- 32: Kopf
- 33: Stützfuß
- 34: Einstellschraube
- 35: Längsseite
- 36: Leitblech
- 37: Schenkel
- 38: Stützkonsole
- 39: Drehachse
- 40: Rohrabschnitt
- 41: Rohrabschnitt
- 42: Drehmuffe
- 43: Anschluss
- 44: Rohrbogen
- 45: Anschluss

- 46: Rohrbogen
- 47: Stellantrieb
- 48: Ventil
- 49: Drehlager
- 50: Konsole
- 51: Stütze
- 52: Drehachse
- 53: Rohrbogen
- 54: T-Muffe
- 55: Vorlaufende
- 56: Rohrbogen
- 57: T-Muffe
- 58: Rücklaufende
- 59: Rohrabschnitt
- 60: Rohrabschnitt
- 61: Drehmuffe
- 62: Rohrbogen
- 63: Drehlager
- 64: Konsole
- 65: Rohrbogen
- 66: Stellantrieb
- 67: Ventil
- 68: Drehachse
- 69: Rohrleitung
- 70: Rohrleitung
- 71: Rohrbogen
- 72: Rohrbogen
- 73: Rohrabschnitt
- 74: Rohrabschnitt
- 75: Rohrbogen
- 76: Stellantrieb
- 77: Ventil
- 78: Drehmuffe
- 79: Drehlager
- 80: Drehlager

## Patentansprüche

1. Unterflurklimagerät, insbesondere Bodenkanalheizung, mit einem im Boden einlassbaren wannenartigen Gehäuse (18), das eine offene Oberseite (22) aufweist, die von einem Rost (26) abgedeckt ist, mit einem in dem Gehäuse (18) um eine Drehachse (39, 52, 68) schwenkbar angeordneten Klimagerät, insbesondere einem Konvektor (10), und mit im Gehäuse (18) sich befindenden Leitungen, die mit dem Vor- und Rücklauf des Klimageräts verbunden sind, **dadurch gekennzeichnet, dass** den Leitungen Drehmuffen (42, 61, 78) zugeordnet oder Anschlüsse der Leitungen an das Klimagerät als Drehmuffen (42, 61, 78) ausgebildet sind und mindestens ein Teil der Drehmuffen (42, 61, 78) um die Drehachse (39, 52, 68) drehbar ist.

2. Unterflurklimagerät Anspruch 1, **dadurch gekennzeichnet, dass** die zum Vorlauf und zum Rücklauf führenden Leitungen zur Versorgung des Konvektors (10) mit einem Wärmeträgermedium als feste Leitungen, insbesondere starre Rohrleitungen, ausgebildet sind, die über mindestens einen geradlinigen Rohrabschnitt (40, 41, 59, 60, 73, 74) verfügen.

3. Unterflurklimagerät nach Anspruch 1 oder 2, **dadurch gekennzeichnet, dass** das Klimagerät mindestens ein auf der Drehachse (39, 52, 68) liegendes Drehlager (49, 63, 79, 80) aufweist.

4. Unterflurklimagerät nach Anspruch 4, **dadurch gekennzeichnet, dass** dem Klimagerät zwei auf der Drehachse (39, 52, 68) liegende Drehlager (49, 63, 79, 80) zugeordnet sind, wobei mindestens einem einen Teil der Leitung bildenden festen Rohrabschnitt (40, 41, 59, 60, 73, 74) mindestens ein Drehlager (49, 63, 79, 80) zugeordnet ist.

5. Unterflurklimagerät nach einem der vorhergehenden Ansprüche, **dadurch gekennzeichnet, dass** die Drehmuffen (42, 61, 78) als Anschlüsse zur Verbindung der Rohrabschnitte (40, 41, 59, 60, 73, 74) am Klimagerät dienen, insbesondere jede Drehmuffe (42, 61, 78) zwei relativ zueinander verdrehbare Teile aufweist, wobei die Achse des drehbaren Teils jeder Drehmuffe (42, 61, 78) auf der Drehachse (39, 52, 68) des Klimageräts liegt.

6. Unterflurklimagerät nach einem der vorhergehenden Ansprüche, **dadurch gekennzeichnet, dass** die Drehmuffen (42, 61, 78) in solchen Bereichen der Rohrabschnitte (40, 41, 59, 60, 73, 74) angeordnet sind, deren Längsachsen auf der Drehachse (39, 52, 68) liegen.

7. Unterflurklimagerät nach einem der vorhergehenden Ansprüche, **dadurch gekennzeichnet, dass** jeweils eine Drehmuffe (42, 61, 78) in einem Rohrabschnitt (40, 41, 59, 60, 73, 74) angeordnet ist, derart, dass die Drehmuffe (42, 61, 78) den jeweiligen Rohrabschnitt (40, 41, 59, 60, 73, 74) in zwei Teile unterteilt, die beide auf einer gemeinsamen Längsachse liegen, die sich auf der Drehachse (39, 52, 68) des Konvektors (10) befindet, wobei ein Teil jedes Rohrabschnitts (40, 41, 59, 60, 73, 74) um seine auf der Drehachse (39, 52, 68) liegenden Achse drehbar ist, während der andere Teil des Rohrabschnitts (40, 41, 59, 60, 73, 74) unverdrehbar ist.

8. Unterflurklimagerät nach einem der vorhergehenden Ansprüche, **gekennzeichnet durch** mindestens eine Stütze (51) zum Halten und Sichern des Konvektors (10) in seiner hochgeklappten Stellung.

9. Unterflurklimagerät nach einem der vorhergehenden Ansprüche, **dadurch gekennzeichnet, dass** das Klimagerät im Gehäuse (18) abgestützt ist mit am Klimagerät angeordnete Abstützmittel, insbesondere die Abstützmittel als fest mit dem Klimagerät verbundene Stützkonsolen (38) ausgebildet sind, die vorzugsweise das Klimagerät nur gegenüber einer Bodenwandung (19) des Gehäuses (18) abstützen.

10. Unterflurklimagerät nach einem der vorhergehenden Ansprüche, **dadurch gekennzeichnet, dass** das Klimagerät Leitflächen, insbesondere Leitbleche (36), aufweist, die mit dem Klimagerät verbunden sind, wobei vorzugsweise die Leitflächen, insbesondere Leitbleche (36), einen oberen Teil jeder aufrechten Längsseite (35) des Klimageräts überdecken.

11. Unterflurklimagerät nach einem der vorhergehenden Ansprüche, **dadurch gekennzeichnet, dass** das Gehäuse (18) außenseitig mit Verstärkungen versehen ist.

12. Unterflurklimagerät nach Anspruch 11, **dadurch gekennzeichnet, dass** sich die Verstärkungen im Querschnittsbereich des Gehäuses (18) verlaufend über den Bereich der Bodenwandung (19) und mindestens einen Teil der beiden gegenüberliegenden Längsseitenwandungen (20) erstrecken.

13. Unterflurklimagerät nach Anspruch 11 oder 12, **dadurch gekennzeichnet, dass** die Verstärkungen Führungen zur Höhenverstellung von Stützfüßen (33) des Gehäuses (18) aufweisen und/oder die Stützfüße (33) an den Verstärkungen befestigt sind.

14. Unterflurklimagerät nach einem der vorhergehenden Ansprüche, **dadurch gekennzeichnet, dass** am oberen Bereich des oben offenen wannenartigen Gehäuses (18) Auflagen und/oder Führungen für den Rost (26) zur Abdeckung des Gehäuses (18) und des mindestens einen darin angeordneten Klimageräts vorgesehen sind.

15. Unterflurklimagerät nach einem der vorhergehenden Ansprüche, **dadurch gekennzeichnet, dass** der offenen Oberseite (22) des Gehäuses (18) mindestens eine hochklappbare bzw. abnehmbare Auflagetraverse (29) für den Rost (26) zugeordnet ist.
